# EUROPÄISCHE PATENTSCHRIFT

(11) **EP 0 907 902 B1**
(45) Veröffentlichungstag und Bekanntmachung des Hinweises auf die Patenterteilung: **30.08.2000**
(21) Anmeldenummer: 97931632.0
(22) Anmeldetag: 19.06.1997
(51) Int. Cl.: G02B 27/26, G02B 26/12, H04N 13/00, H04N 5/74, H04N 9/31

(54) **VERFAHREN ZUR DREIDIMENSIONALEN BILDDARSTELLUNG AUF EINER GROSSBILDPROJEKTIONSFLÄCHE MITTELS EINES LASER-PROJEKTORS**
METHOD OF THREE-DIMENSIONAL IMAGING ON A LARGE-SCREEN PROJECTION SURFACE USING A LASER PROJECTOR
PROCEDE DE REPRESENTATION VISUELLE TRIDIMENSIONNELLE SUR UNE SURFACE DE PROJECTION A GRAND ECRAN A L'AIDE D'UN PROJECTEUR A LASER

(30) Priorität: 28.06.1996 DE 19626096
(43) Veröffentlichungstag der Anmeldung: 14.04.1999
(73) Patentinhaber: Siemens Nixdorf Informationssysteme AG, 33106 Paderborn (DE)
(72) Erfinder: MAYER, Christoph, D-86159 Augsburg (DE); LOCKMANN, Klaus, D-33129 Delbrück (DE)
(74) Vertreter: Hermann, Uwe, Dipl.-Ing.
(86) Internationale Anmeldenummer: DE9701286
(87) Internationale Veröffentlichungsnummer: WO9800748

(56) Entgegenhaltungen:
- EP-A- 0 211 596
- DE-A- 4 125 241
- US-A- 5 485 225
- PATENT ABSTRACTS OF JAPAN vol. 009, no. 033 (P-334), 13.Februar 1985 & JP 59 176720 A (FUOTORON:KK), 6.Oktober 1984,

## Beschreibung

Die Erfindung betrifft Verfahren zur dreidimensionalen Bilddarstellung auf einer Großbildprojektionsfläche mittels eines Laser-Projektors gemäß den Oberbegriffen der Ansprüche 1 und 3.

Es gibt verschiedene Ausführungen von Fernseh-Projektoren, die ein Bild auf eine Großbildprojektionsfläche projizieren können. Eine davon befaßt sich mit Laser-Projektoren. Ein Laser-Projektor ist zur zweidimensionalen Darstellung von Grafiken u.s.w. verwendbar. Bei einem Farb-Laser-Projektor beispielsweise wird Licht der Farben Rot, Grün und Blau durch drei Laser erzeugt. Die Lichtstrahlen werden durch einen sich drehenden Polygonspiegel horizontal abgelenkt. Die horizontale Ablenkung erlaubt die Darstellung einer Bildschirmzeile. Nach der horizontalen Ablenkung erfolgt durch einen weiteren sich drehenden Spiegel eine vertikale Ablenkung. Auf diese Weise wird über eine Optik das Bild auf eine Großbildprojektionsfläche projiziert. Ein Laser-Projektor ermöglicht somit die Darstellung von sehr großen Bildern mit besonders brillanten Farben.

Ein Farb-Laser-Projektor weist zwar drei Laser für die Farben Rot, Grün und Blau auf, das Laserprinzip ist aber bei allen drei Farben gleich. Es werden lediglich für einen einzelnen Bildpunkt auf der Großbildprojektionsfläche die verschiedenen Farben für eine entsprechend benötigte Gesamtfarbe einander überlagert.

Unter den Laser-Projektoren gibt es zwei verschiedene Grundtypen. Die einen arbeiten mit Multimode- und die anderen mit Monomode-Lasern. Die von Monomode-Lasern erzeugten Laserstrahlen weisen eine einzige Polarisationsrichtung auf. Sie haben ein linear polarisiertes Licht. Demgegenüber haben die von Multimode-Lasern erzeugten Laserstrahlen zirkular polarisiertes Licht, d.h. sie haben mehr als nur eine Polarisationsrichtung. Beispielsweise haben sie 2, 4 u.s.w. verschiedene Polarisationsrichtungen. Im Extremfall streuen ihre Polarisationen nach allen Richtungen.

Das Prinzip der Laser-Display-Technik ist in der deutschen Zeitschrift Funkschau, 1995, Heft 18, Seiten 104 bis 107, unter der Spalte Technik und dem Titel "Die Laser-Display-Technik" und in einem auf der CeBIT 1995 herausgegebenen Verkaufsprospekt der Fa. Laser Display Technologie GmbH & Co. KG, Carl-Zeiss-Str. 2, 07552 Gera beschrieben. Ferner ist aus der deutschen Offenlegungsschrift DE 32 14 327 A1 bekannt, einen Bildschirm im zeilenweisen Wechsel mit Polarisationsfolien-Streifen abwechselnder Polarisationsrichtungen zu belegen, so daß sich je Fernsehhalbbild ein Stereohalbbild wiedergeben läßt.

Aus den Druckschriften EP-A-0 211 596 und JP-A-59/176 720 sind Verfahren für Großbildprojektoren bekannt, mit denen dreidimensionale Bilder dargestellt werden können. Dabei werden Polygonspiegel verwendet, auf deren Spiegelteile ein Laserstrahl frontal auftrifft.

Aus der Druckschrift DE-A-41 25 241 ist ebenfalls ein Verfahren für Großbildprojektoren bekannt, mit dem dreidimensionale Bilder darstellbar sind. Bei diesem Verfahren ist ein Polygonspiegel nicht verwendet.

Aufgabe der Erfindung ist es, Verfahren zur dreidimensionalen Bilddarstellung auf einer Großbildprojektionsfläche mittels des Funktionsprinzips eines Laser-Projektors anzugeben.

Diese Aufgabe wird durch Verfahren der eingangs genannten Art erfindungsgemäß mit den im Kennzeichen der Ansprüche 1 und 3 stehenden Verfahrensschritten gelöst.

Danach wird unter der Anwendung des Multimode-Laser-Prinzips der Multimode-Laserstrahl auf in zwei unterschiedliche Richtungen jeweils abwechselnd lichtpolarisierende Spiegelteile des Polygonspiegels geworfen. Von den Spiegelteilen des Polygonspiegels aus werden entsprechend der jeweils abwechselnden lichtpolarisierenden Spiegelteile auf der Großbildprojektionsfläche jeweils abwechselnd Zeilen mit der einen und Zeilen mit der anderen Polarisationsrichtung geschrieben. Außerdem wird die Steuerung des Multimode-Laserstrahls in der Weise ausgeführt, daß auf der Großbildprojektionsfläche jeweils ein erstes Bild nur mit den Zeilen der einen Polarisationsrichtung und ein zweites Bild nur mit den Zeilen der anderen Polarisationsrichtung entsteht. Die jeweils beiden Bilder haben dabei die Eigenschaft, daß sie von einem Betrachter mit einer Brille mit einem ersten Brillenglas für die eine und mit einem zweiten Brillenglas für die andere Polarisationsrichtung zu einem dreidimensionalen Gesamtbild zusammenfaßbar sind

Unter Anwendung des Monomode-Laserprinzips wird der Monomode-Laserstrahl vor dem Auftreffen aus einer ersten Richtung auf jeweilige zugehörige erste Spiegelteile des Polygonspiegels, die für eine Ablenkung auf jeweils erste Zeilen von jeweils aufeinanderfolgenden ersten und zweiten Zeilen der Großbildprojektionsfläche sorgen, durch einen teiltransparenten Spiegel gelenkt. Der teiltransparente Spiegel dient zum Ablenken eines Teilstrahls des Monomode-Laserstrahls. Nach dem teiltransparenten Spiegel bzw. nach dem Ablenken eines Teilstrahles des Monomode-Laserstrahls wird wahlweise entweder der abgelenkte Teilstrahl oder der nicht abgelenkte Monomode-Laserstrahl in seiner Polarisationsrichtung gedreht. Der abgelenkte und gegebenenfalls gedrehte Teilstrahl wird aus einer gegenüber der ersten Richtung zweiten Richtung auf jeweilige zugehörige zweite Spiegelteile des Polygonspiegels für eine Ablenkung auf die jeweils zweiten Zeilen der jeweils aufeinanderfolgenden ersten und zweiten Zeilen der Großbildprojektionsfläche gelenkt. Die Steuerung des Monomode-Laserstrahls erfolgt dabei in der Weise, daß auf der Großbildprojektionsfläche jeweils ein erstes Bild mit der gedrehten/ungedrehten Polarisationsrichtung auf den jeweils ersten Zeilen und ein zweites Bild mit der ungedrehten/gedrehten Polarisationsrichtung auf den jeweils zweiten Zeilen der Großbildprojektionsfläche entsteht. Die jeweils erzeugten beiden Bilder haben dabei die Eigenschaft, daß sie von einem Betrachter mit einer Brille mit einem ersten Brillenglas für die eine und mit einem zweiten Brillenglas für die andere Polarisationsrichtung zu einem dreidimensionalen Gesamtbild zusammenfaßbar sind.

Beide Verfahren ermöglichen somit einem Betrachter das dreidimensionale sehen auf einer Großbildprojektionsfläche mittels des Funktionsprinzips eines Laser-Projektors.

Vorteilhafte Ausgestaltungen der Erfindung sind Gegenstand von Unteransprüchen. Danach ist bei Verwendung von zwei unterschiedlichen Polarisationsrichtungen, die zueinander um 90 Grad gedreht sind, eine maximale Übersprechdämpfung zwischen den jeweils dargestellten beiden Bildern mit unterschiedlichen Polarisationsrichtungen gegeben.

Weist der teiltransparente Spiegel eine Transparenz von 50% auf, haben der nach dem teiltransparenten Spiegel erhaltene und der abgelenkte Laserstrahl jeweils gleiche Energieleistungen. Eine Weiternutzung der beiden Teillaserstrahlen ist dadurch besonders einfach, da eine Anpassung der Energieleistungen aneinander entfällt.

Zur Erzeugung der beiden Bilder wird die Großbildprojektionsfläche Zeile für Zeile abgetastet. Beim Momomode-Laserprinzip wird für das Schreiben der jeweils ersten Zeilen der Laserstrahl aus der einen Richtung und für das Schreiben der jeweils zweiten Zeilen der Laserstrahl aus der anderen Richtung verwendet. Wird beim Schreiben der jeweils einen Zeilen der Laserstrahl zum Schreiben für die jeweils anderen Zeilen auf eine Absorbtionsfläche gelenkt, wird ein zugehöriges Gerät innenseitig nicht beleuchtet und erwärmt. Wird der Laserstrahl auf eine Photovoltaikplatte gelenkt, kann zu einem gewissen Grad Energie aus dem Laserstrahl zurückgewonnen werden.

Nachfolgend werden zwei Ausführungsbeispiele der Erfindung anhand einer Zeichnung näher erläutert. Darin zeigen
- Figur 1: ein Prinzipschaltbild eines erfindungsgemäßen Multimode-Laser-Projektors
- Figur 2: ein Prinzipschaltbild eines erfindungsgemäßen Mono-mode-Laser-Projektors, und
- Figur 3: eine Dreheinrichtung aus der Figur 2 in Prinzipdarstsellung zum Drehen der Polarisationsrichtung des abgelenkten Laser-Teilstrahls.

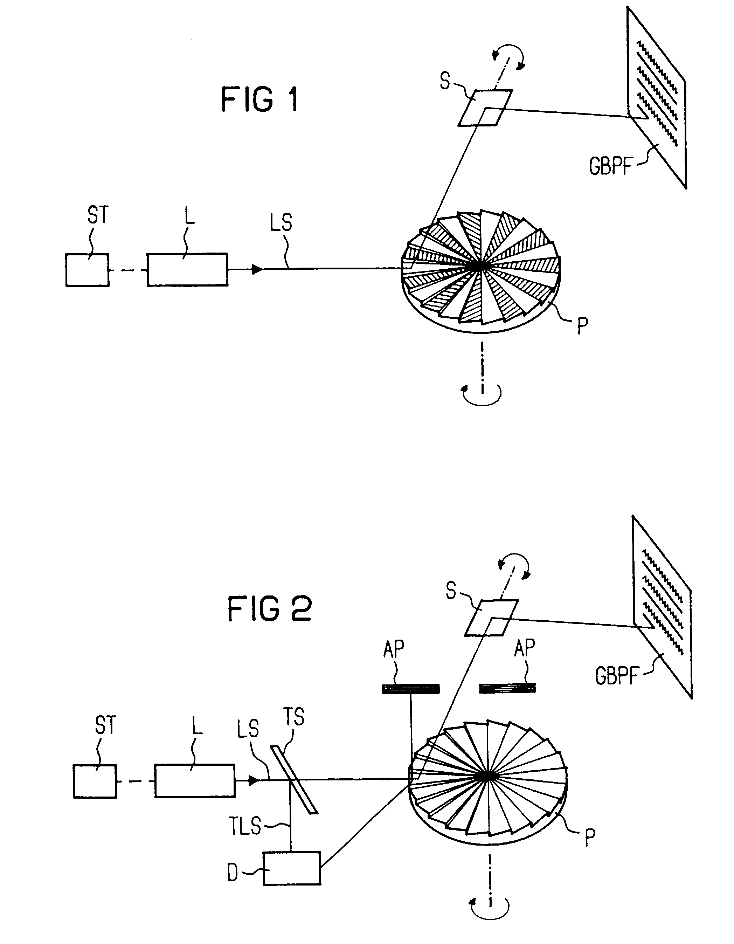

In den Figuren 1 und 2 sind nur jeweils ein Laser L dargestellt. Bei Farbprojektoren sind Laser L für jeweils eine der Farben Rot, Grün und Blau vorgesehen. Jeder dieser Laser L arbeitet aber nach dem gezeigten Prinzip, so daß an dieser Stelle nur jeweils ein Laser L gezeigt werden muß.

In den Figuren 1 und 2 sind die für das Verständnis der Erfindung notwendigen grundlegenden Teile eines Laser-Projektors dargestellt. Es sind einmal ein bereits angesprochener Laser L, der einen Laserstrahl LS abgibt, ein Polygonspiegel P, der für eine horizontale Laserstrahl-Ablenkung zuständig ist, ein weiterer Spiegel S, der für eine vertikale Laserstrahl-Ablenkung zuständig ist, und eine Steuerung ST für die Steuerung des vom Laser L abgegebenen Laserstrahls LS.

Der für die horizontale Ablenkung des Laserstrahls LS zuständige Polygonspiegel P rotiert um eine Achse. Die Rotatation ist durch einen entsprechenden Pfeil um die betreffende Achse angedeutet. Der weitere Spiegel S schwenkt im Ausführungsbeispiel hin und her, ebenfalls angedeutet durch einen entsprechenden Pfeil um die entsprechende Achse.

In der Figur 1 handelt es sich bei dem Laser L um einen Multimode-Laser, während es sich beim dem Laser L in der Figur 2 um einen Monomode-Laser handelt.

Das Grundprinzip eines Laserprojektors ist, daß der vom Laser L erzeugte Laserstrahl LS auf den Polygonspiegel P geworfen wird. Der Polygonspiegel P besteht dabei aus vielen, z.B. 32 Spiegelteilen, die jeweils für eine Zeile einer Großbildprojektionsfläche GBPF zuständig sind. Die Spiegelteile sind vom Umfangverlauf gesehen sägezahnförmig angeordnet. Dies kommt daher, weil die Spiegelteile wie die Blätter einer Luftschraube angeordnet sind und jeweils einen Anstellwinkel aufweisen. Der Laserstrahl LS trifft jeweils auf einen Spiegelteil von der Seite. Durch die Drehung des Polygonspiegels P und dem jeweiligen schräggestellten Spiegelteil erfährt der Laserstrahl LS neben einer Strahlablenkung eine lineare Strahlbewegung im abgelenkten Strahlteil. Durch Umlenken des linear bewegten Strahlteils des Laserstrahls LS durch den weiteren Spiegel S auf die Großbildprojektionsfläche GBPF kann auf diese Weise eine Zeile der Großbildprojektionsfläche GBPF beschrieben werden.

Wird bei einem Wechsel des auf den Polygonspiegel P treffenden Laserstrahls LS auf einen nächsten Spiegelteil der weitere Spiegel S um einen Anteil weitergedreht, kann mit dem nächsten Spiegelteil eine nächste Zeile auf der Großbildprojektionsfläche GBPF beschrieben werden. Nach Durchlauf aller Spiegelteile wird der weitere Spiegel S zurückgestellt, und die Abtastung der Großbildprojektionsfläche GBPF kann von vorne beginnen. Insgesamt wird auf diese Weise ein zweidimensionales Bild dargestellt.

Zur Darstellung eines dreidimensionales Bild wird gemäß der Figur 1, der Laserstrahl LS auf einen Polygonspiegel P geworfen, dessen Spiegelteile in zwei Polarisationsrichtungen abwechselnd lichtpolarisierende Schichten aufweist. In der Figur 1 ist dies durch abwechselnd schraffierte und nicht schraffierte Flächen dargestellt. Da der Laserstrahl LS ein Multimode-Laserstrahl ist, kann dieser direkt auf den Polygonspiegel P gelenkt werden. Von dem Multimode-Laserstrahl werden jeweils die Polarisationsrichtungen durch den Polygonspiegel P herausgefiltert, die den Polarisationsrichtungen der polarisierenden Schichten der Spiegelflächen entsprechen.

Günstigerweise wird von Anfang an ein Multimode-Laser verwendet, der nur diese beiden Polarisationsrichtungen aufweist, weil dann durch geringste Energieverluste eine optimale Energiebilanz erreicht wird.

Durch den beschichteten Polygonspiegel P werden jeweils erste Zeilen von jeweils aufeinanderfolgenden ersten und zweiten Zeilen der Großbildprojektionsfläche GBPF mit der einen Polarisationsrichtung und die jeweils zweiten Zeilen mit der anderen Polarisationsrichtung beschrieben. In der Figur 1 ist dies durch dicker und dünner dargestellte Zeilen verdeutlicht.

Erfolgt über die Steuerung ST eine Steuerung des Laserstrahls LS derart, daß auf der Großbildprojektionsfläche GBPF jeweils ein erstes Bild nur mit den Zeilen der einen Polarisationsrichtung und ein zweites Bild nur mit den Zeilen der anderen Polarisationsrichtung entsteht, wobei solche Bilder erzeugt werden sollen, daß von einem Betrachter mit einer Brille mit einem ersten Brillenglas für die eine und mit einem zweiten Brillenglas für die andere Polarisationsrichtung die Bilder vom Inhalt her zu einem sinnvollen dreidimensionalen Gesamtbild zusammenfaßbar sind, kann mit dem vorliegenden Laser-Projektor eine dreidimensionale Bilddarstellung realisiert werden.

Handelt es sich beim dem Laser L um einen Monomode-Laser, kann das Prinzip nach Figur 1 nicht angewendet werden, weil der Laserstrahl LS durch die unterschiedlich polarisierenden Beschichtungen der Spiegelteile des Polygonspiegel P einmal weitergeleitet wird, das andere mal aber wegen nicht zusammenpassender Polarisationsrichtung zwischen dem Laserstrahl LS und der Beschichtung absorbiert wird. In diesem Fall wird gemäß der Figur 2 der Laserstrahl LS durch einen teiltransparenten Spiegel TS gelenkt, bevor er auf den Polygonspiegel P gelenkt wird. Der Polygonspiegel P benötigt dabei keinerlei lichtpolarisierende Schicht. Bei den Spiegelteilen handelt es sich um einfache Spiegel.

Der teiltransparente Spiegel TS lenkt einen Teilstrahl TSL ab. Vorteilhafterweise weist der teiltransparente Spiegel TS eine Transparenz von 50% auf, so daß der Teilstrahl TSL und der noch durch den teiltransparente Spiegel TS hindurchgehende Laserstrahl jeweils einen Energieanteil von 50% haben.

Der Teilstrahl TSL wird in eine Dreheinrichtung D gelenkt. In der Dreheinrichtung D wird die Polarisationsrichtung des Teilstrahls TSL vorzugsweise um 90 Grad gedreht. Aus der Dreheinrichtung D wird der Teilstrahl TSL dann auf den Polygonspiegel P aus einer anderen Richtung als der ungedrehte Laserstrahl nach dem teiltransparenten Spiegel TS gelenkt. Bei entsprechenden Anstellungen der zum gedrehten bzw. nicht gedrehten Laserstrahlen gehörenden Spiegelteile des Polygonspiegels P können damit auf der Großbildprojektionsfläche GBPF in entsprechender Weise wie bei der Figur 1 jeweils erste Zeilen mit der einen Polarisationsrichtung und jeweils zweite Zeilen mit der anderen Polarisationsrichtung beschrieben werden. Letztlich können damit wieder jeweils zwei Bilder mit unterschiedlichen Polarisationsrichtungen erzeugt werden, die von einem Betrachter mit einer entsprechenden, oben bereits angesprochenen Brille zu einem dreidimensionalen Bild zusammenfaßbar sind.

Durch die Anpassung der Anstellungen der abwechselnd eingestellten Spiegelteile des Polygonspiegel P an die Richtungen, aus denen der jeweils zugehörige Laserstrahl kommt, ergibt sich der Vorteil, daß der jeweils andere Laserstrahl für die jeweils anders eingestellten Spiegelteile des Polygonspiegels P vom weiteren Spiegel S weggelenkt wird, so daß dieser unwirksam bleibt. Vorteilhafterweise wird dieser unwirksame bzw. gerade nicht benötigte Laserstrahl auf eine Absorbtions- oder Photovoltaikplatte AP gelenkt.

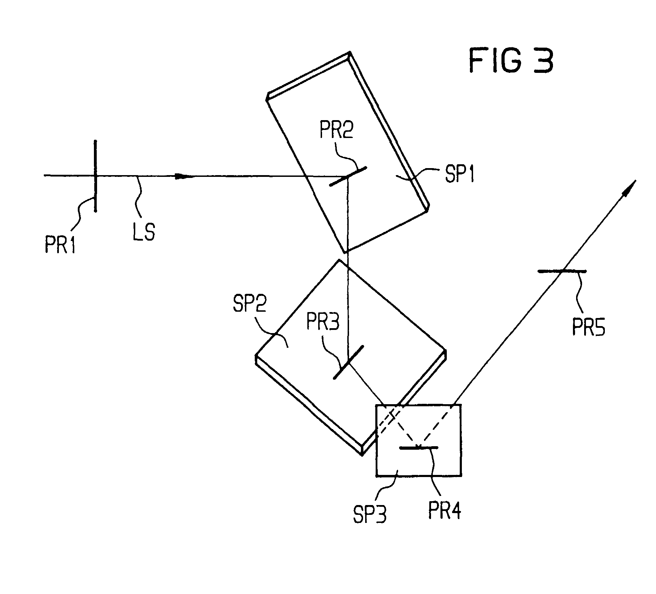

In der Figur 3 ist ein möglicher Aufbau einer Dreheinrichtung D gezeigt. Eingangsseitig kommt der Laserstrahl LS mit einer Polarisationsrichtung PR1 an und wird auf einen ersten Spiegel SP1 gelenkt. Dieser ist beispielsweise mit einer x-y-z-Raumkoordinate -45°, -45°, 0° eingestellt. Der erste Spiegel Spl dreht die Polarisationsrichtung PR1 in die Polarisationsrichtung PR2. Vom ersten Spiegel SP1 wird der Laserstrahls LS zu einem zweiten Spiegel SP2, der beispielsweise die Raumkoordinaten 0°, 45°, -45° hat, gelenkt. Der zweite Spiegel SP2 verdreht die Polarisationsrichtung PR2 in die Polarisationsrichtung PR3. Vom zweiten Spiegel SP2 wird der Laserstrahl LS auf einen dritten Spiegel SP3, der beispielsweise die Raumkoordinaten -90°, a°, 0° hat, gelenkt. Der dritte Spiegel SP3 dreht die Polarisationsrichtung PR3 in eine Polarisationsrichtung PR4, die gleichzeitig der Abstrahlpolarisationsrichtung PR5 entspricht, mit der der Laserstrahls LS auf den Polygonspiegel P gelenkt wird. Vorteilhafterweise beträgt der unterschied der Polarisationsrichtungen PR1 und PR5 90 Grad.

Unter Großbildprojektionsfläche GBPF ist nicht ausschließlich eine relativ große Fläche zu verstehen. Diese kann im Einzelfall auch kleine Ausmaße haben.

## Patentansprüche

1. Verfahren zur dreidimensionalen Bilddarstellung auf einer Großbildprojektionsfläche (GBPF) mittels des Funktionsprinzips eines einen sich drehenden Polygonspiegel (P) für die Zeilenablenkung aufweisenden Laser-Projektors mit wenigstens einem einen Multimode-Laserstrahl (LS) abgebenden Laser (L), **dadurch gekennzeichnet**, daß der Multimode-Laserstrahl (LS) von der Seite auf in zwei unterschiedliche Richtungen jeweils abwechselnd lichtpolarisierende, wie die Blätter einer Luftschraube angeordnete und jeweils einen Anstellwinkel aufweisende Spiegelteile des Polygonspiegels (P) geworfen wird, von denen aus entsprechend der jeweils abwechselnden lichtpolarisierenden und im Winkel angestellten Spiegelteile auf der Großbildprojektionsfläche (GBPF) jeweils abwechselnd Zeilen mit der einen und Zeilen mit der anderen Polarisationsrichtung geschrieben werden, und daß die Steuerung des Multimode-Laserstrahls (LS) in der Weise ausgeführt wird, daß auf der Großbildprojektionsfläche (GBPF) jeweils ein erstes Bild nur mit den Zeilen der einen Polarisationsrichtung und ein zweites Bild nur mit den Zeilen der anderen Polarisationsrichtung mit der jeweiligen Eigenschaft, daß sie von einem Betrachter mit einer Brille mit einem ersten Brillenglas für die eine und mit einem zweiten Brillenglas für die andere Polarisationsrichtung zu einem dreidimensionalen Gesamtbild zusammenfaßbar sind, erzeugt werden.

2. Verfahren nach Anspruch 1, **dadurch gekennzeichnet**, daß die jeweils mit zwei unterschiedlichen Polarisationsrichtungen erzeugten Bilder mit um 90 Grad unterschiedlichen Polarisationsrichtungen erzeugt werden.

3. Verfahren zur dreidimensionalen Bilddarstellung auf einer Großbildprojektionsfläche (GBPF) mittels des Funktionsprinzips eines einen sich drehenden Polygonspiegel (P) für die Zeilenablenkung aufweisenden Laser-Projektors mit wenigstens einem einen Monomode-Laserstrahl (LS) abgebenden Laser (L), **dadurch gekennzeichnet**, daß der Monomode-Laserstrahl (LS) vor dem Auftreffen aus einer ersten Richtung auf jeweilige zugehörige erste Spiegelteile des Polygonspiegels (P) für eine Ablenkung auf jeweils erste Zeilen von jeweils aufeinanderfolgenden ersten und zweiten Zeilen der Großbildprojektionsfläche (GBPF) durch einen teiltransparenten Spiegel (TS) zum Ablenken eines Teilstrahls (TSL) gelenkt wird, daß wahlweise entweder der abgelenkte Teilstrahl (TSL) oder der nicht abgelenkte Monomode-Laserstrahl (LS) nach dem teiltransparenten Spiegel (TS) in seiner Polarisationsrichtung gedreht wird, daß der abgelenkte und gegebenenfalls gedrehte Teilstrahl (TSL) aus einer gegenüber der ersten Richtung zweiten Richtung auf jeweilige zugehörige zweite Spiegelteile des Polygonspiegels (P) für eine Ablenkung auf die jeweils zweiten Zeilen der jeweils aufeinanderfolgenden ersten und zweiten Zeilen der Großbildprojektionsfläche (GBPF) gelenkt wird, und daß die Steuerung des Monomode-Laserstrahls (LS) in der Weise ausgeführt wird, daß auf der Großbildprojektionsfläche (GBPF) jeweils ein erstes Bild mit der gedrehten/ungedrehten Polarisationsrichtung auf den jeweils ersten Zeilen und ein zweites Bild mit der ungedrehten/gedrehten Polarisationsrichtung auf den jeweils zweiten Zeilen der Großbildprojektionsfläche (GBPF) mit der jeweiligen Eigenschaft, daß sie von einem Betrachter mit einer Brille mit einem ersten Brillenglas für die eine und mit einem zweiten Brillenglas für die andere Polarisationsrichtung zu einem dreidimensionalen Gesamtbild zusammenfaßbar sind, erzeugt werden.

4. Verfahren nach Anspruch 3, **dadurch gekennzeichnet**, daß der Monomode-Laserstrahl (LS) durch einen teiltransparenten Spiegel (TS) mit 50%iger Transparenz gelenkt wird.

5. Verfahren nach Anspruch 3 oder 4, **dadurch gekennzeichnet**, daß die Drehung des Laserstrahls (LS) durch Spiegeln um 90 Grad ausgeführt wird.

6. Verfahren nach einem der Ansprüche 3 bis 5, **dadurch gekennzeichnet**, daß der zu jeweiligen Spiegelteilen des Polygonspiegels (P) nicht zugehörige Laserstrahl (LS) auf eine Absorbtionsfläche oder Photovoltaikplatte (AP) gelenkt wird.

## Claims

1. Method for three-dimensional imaging on a large-area projection surface (GBPF) by means of the functional principle of a laser projector having a rotating polygonal mirror (P) for line deflection, having at least one laser (L) outputting a multimode laser beam (LS), characterized in that the multimode laser beam (LS) is cast from the side onto mirror parts of the polygonal mirror (P) which respectively polarize light alternately in two different directions, and are arranged like the blades of an air screw and respectively have a setting angle and starting from which, in accordance with respectively alternating light-polarizing mirror parts set at the angle, respectively alternating lines of one direction of polarization and lines of the other direction of polarization are written on the large-area projection surface (GBPF), and in that the control of the multimode laser beam (LS) is carried out in such a way that a first image having only the lines of one direction of polarization and a second image having only the lines of the other direction of polarization are respectively produced on the large-area projection surface (GBPF) with the respective property that they can be combined to form a three-dimensional overall image by a viewer having spectacles with a first spectacle lens for one direction of polarization and with a second spectacle lens for the other direction of polarization.

2. Method according to Claim 1, characterized in that the images respectively produced with two different directions of polarization are produced with directions of polarization differing by 90 degrees.

3. Method for three-dimensional imaging on a large-area projection surface (GBPF) by means of the functional principle of a laser projector having a rotating polygonal mirror (P) for a line deflection, having at least one laser (L) outputting a multimode laser beam (LS), characterized in that, before impinging from a first direction on respective associated first mirror parts of the polygonal mirror (P) for deflection respectively onto first lines of respectively successive first and second lines of the large-area projection surface (GBPF), the monomode laser beam (LS) is directed by a semi-transparent mirror (TS) for deflecting a partial beam (TSL), in that optionally either the deflected partial beam (TSL) or the non-deflected monomode laser beam (LS) is rotated downstream of the semi-transparent mirror (TS) in its direction of polarization, in that the deflected and, if appropriate, rotated partial beam (TSL) is directed from a second direction by comparison with the first direction onto respective associated second mirror parts of the polygonal mirror (P) for deflection onto the respectively second lines of the respectively successive first and second lines of the large-area projection surface (GBPF), and in that the control of the monomode laser beam (LS) is carried out in such a way that a first image having the rotated/non-rotated direction of polarization on the respectively first lines and a second image having the non-rotated/rotated direction of polarization on the respectively second lines of the large-area projection surface (GBPF) are respectively produced on the large-area projection surface (GBPF), with the respective property that they can be combined to form a three-dimensional overall image by a viewer having spectacles with a first spectacle lens for one direction of polarization and with a second spectacle lens for the other direction of polarization.

4. Method according to Claim 3, characterized in that the monomode laser beam (LS) is directed through a semi-transparent mirror (TS) having a 50% transparency.

5. Method according to Claim 3 or 4, characterized in that the rotation of a laser beam (LS) is carried out through 90 degrees by mirrors.

6. Method according to one of Claims 3 to 5, characterized in that the laser beam (LS) not associated with respective mirror parts of the polygonal mirror (P) is directed onto an absorption surface or a photovoltaic plate (AP).

## Revendications

1. Procédé de représentation d'image en trois dimensions sur une surface (GBPF) de projection à grande image au moyen du principe de fonctionnement d'un projecteur à laser comportant un miroir (P) polygonal tournant pour le balayage horizontal et comportant au moins un laser (L) fournissant un faisceau (LS) laser multimode, caractérisé en ce que le faisceau (LS) laser multimode est envoyé depuis le côté sur des parties réfléchissantes du miroir (P) polygonal qui polarisent la lumière alternativement dans deux directions différentes, qui sont disposées comme les pales d'une hélice d'avion, qui ont chacune un angle d'incidence et à partir desquelles, suivant les parties réfléchissantes qui polarisent la lumière de manière alternée et dont l'angle d'incidence est réglé, on écrit sur la surface (GBPF) de projection à grande image en alternance des lignes ayant l'une des directions de polarisation et des lignes ayant l'autre direction de polarisation, et en ce que la commande du faisceau (LS) laser multimode s'effectue de telle manière que l'on produit sur la surface (GBPF) de projection à grande image une première image n'ayant que les lignes de l'une des directions de polarisation et une deuxième image n'ayant que les lignes de l'autre direction de polarisation avec la propriété associée qu'elles peuvent être réunies en une image totale tridimensionnelle par un observateur ayant des lunettes ayant un premier verre de lunette pour l'une des direction de polarisation et un deuxième verre de lunette pour l'autre direction de polarisation.

2. Procédé suivant la revendication 1, caractérisé en ce que les images produites en ayant deux directions de polarisation différentes sont produites en ayant des directions de polarisation différentes de 90°.

3. Procédé pour la représentation d'images tridimensionnelles sur une surface (GBPF) de projection à grande image au moyen du principe de fonctionnement d'un projecteur à laser comportant un miroir (P) polygonal tournant pour le balayage de lignes et comportant au moins un laser (L) fournissant un faisceau (LS) laser monomode, caractérisé en ce que le faisceau (LS) laser monomode est, avant l'arrivée depuis une première direction à de premières parties réfléchissantes associées du miroir (P) polygonal pour une déviation vers de premières lignes de première et deuxième lignes qui se succèdent de la surface (GBPF) de projection à grande image, envoyé par un miroir (TS) semi transparent servant à la déviation d'un sous-faisceau (TSL), en ce que, au choix, le sous-faisceau (TSL) dévié ou du faisceau (LS) laser monomode non dévié est tourné en aval du miroir (TS) semi transparent dans sa direction de polarisation, en ce que le sous-faisceau (TSL) dévié et éventuellement tourné est envoyé, à partir d'une deuxième direction modifiée par rapport à la première direction, à des deuxièmes parties réfléchissantes associées du miroir (P) polygonal pour une déviation vers les deuxièmes lignes de premières et deuxièmes lignes qui se succèdent de la surface (GBPF) de projection à grande image, et en ce que la commande du faisceau (LS) laser monomode s'effectue de telle manière qu'il est produit sur la surface (GBPF) de projection à grande image une première image avec la direction de polarisation tournée/non tournée sur les premières lignes et une deuxième image avec la direction de polarisation non tournée/tournée sur les deuxièmes lignes de la surface (GBPF) de projection à grande image, avec la propriété associée qu'elles peuvent être réunies en une image totale tridimensionnelle par un observateur ayant des lunettes ayant un premier verre de lunette pour l'une des directions de polarisation et ayant un deuxième verre de lunette pour l'autre direction de polarisation.

4. Procédé suivant la revendication 3, caractérisé en ce que le faisceau (LS) laser monomode est guidé par un miroir (TS) semi transparent ayant une transparence de 50 %.

5. Procédé suivant la revendication 3 ou 4, caractérisé en ce que la rotation du faisceau (LS) laser par des miroirs est de 90°.

6. Procédé suivant l'une des revendications 3 à 5, caractérisé en ce que le faisceau (LS) laser qui n'est pas associé à des parties réfléchissantes déterminées du faisceau (P) polygonal est envoyé à une surface d'absorption ou à une plaque (AP) photovoltaïque.
